# DEMANDE DE BREVET EUROPEEN

(11) **EP 4 753 127 A1**
(43) Date de publication de la demande: **03.06.2026**
(21) Numéro de dépôt: 25219978.1
(22) Date de dépôt: 02.12.2025
(51) Int. Cl.: H02M 1/00, H02M 3/158, H02M 7/49, H02M 7/5387

(54) **DISPOSITIF DE CONVERSION D ÉNERGIE**

(30) Priorité: 02.12.2024 FR 2413308
(71) Demandeur: Commissariat à l'Energie Atomique et aux Energies Alternatives, 75015 Paris (FR); Institut National Polytechnique de Toulouse, 31400 Toulouse (FR); Centre National de la Recherche Scientifique, 75016 Paris (FR); UNIVERSITE TOULOUSE III - PAUL SABATIER, 31062 Toulouse Cedex 9 (FR)
(72) Inventeur: MEYNARD, Thierry, 31071 TOULOUSE CEDEX 7 (FR); MARTIN, Jérémy, 75015 PARIS (FR); BEMBICH, Pier-Paolo, 75015 PARIS (FR)
(74) Mandataire: Lavoix

(57) **Abrégé**

La présente invention concerne un dispositif (16) de conversion d'énergie entre une source de tension continue (12) et une source de tension alternative (14), comprenant :
- un premier onduleur (20) ayant une tension de fonctionnement égale à une tension basse (Vₘᵢₙ) prédéterminée, le premier onduleur (20) étant propre à être connecté à la source de tension alternative (14),
- un second onduleur (22) ayant une tension de fonctionnement égale à une tension haute (Vₘₐₓ) prédéterminée, le second onduleur (22) étant propre à être connecté à la source de tension alternative (14), et
- un hacheur (24) propre à être connecté à la source de tension continue (12) et connecté au premier onduleur (20) et au second onduleur (22) de sorte que la tension aux bornes du hacheur (24) soit égale à la différence entre la tension haute (Vₘₐₓ) et la tension basse (Vₘᵢₙ).

## Description

La présente invention concerne un dispositif de conversion d'énergie entre une source de tension continue et une source de tension alternative. La présente invention concerne aussi un ensemble électrique associé.

Classiquement, la conversion d'énergie depuis une source de tension continue (DC) vers une source de tension alternative (AC) est réalisée à l'aide d'un onduleur à deux niveaux de tension ou à trois niveaux de tension.

Dans le domaine photovoltaïque, deux types de chaînes de conversion d'énergie sont classiquement utilisées pour convertir la tension DC d'une source élémentaire en tension AC :
- l'une comportant un seul étage de conversion DC/AC, et
- l'autre comportant un premier étage hacheur, dit « boost », en entrée (DC/DC) qui réalise la recherche du point de fonctionnement à puissance maximum de la source élémentaire photovoltaïque, généralement constituée d'un ensemble de modules photovoltaïques connectés en série. Cette recherche est réalisée indépendamment de la tension de bus d'entrée du second étage de conversion DC/AC.

Ces deux chaînes de conversion sont dimensionnées de sorte à supporter des tensions importantes, notamment la tension au point de fonctionnement de puissance maximum de la série de modules photovoltaïques, également appelée string photovoltaïque.

Un tel dimensionnement impose d'utiliser des semi-conducteurs aptes à fonctionner à des tensions élevées (sur la pleine plage de tension du string photovoltaïque), ce qui contraint la fabrication des convertisseurs, et est susceptible de diminuer l'efficacité de la conversion. En particulier, la tension découpée par ces semi-conducteurs est carrée et doit être filtrée par des éléments passifs (inductances et condensateurs) qui sont d'autant plus volumineux, et chers que la tension découpée est élevée. Ces éléments passifs génèrent également des pertes d'autant plus élevées que leur taille est importante.

Le but de l'invention est alors de proposer un dispositif de conversion d'énergie entre une source de tension continue et une source de tension alternative, dans lequel la tension appliquée aux semi-conducteurs du dispositif est réduite, de sorte à augmenter l'efficacité de la conversion et à réduire le coût du dispositif complet.

A cet effet, l'invention a pour objet un dispositif de conversion d'énergie entre une source de tension continue et une source de tension alternative, la source de tension continue comprenant au moins deux blocs comprenant chacun au moins un module électrique, chaque module électrique fonctionnant sur un domaine environnemental de fonctionnement, la tension aux bornes de chaque bloc variant sur une plage de tension pour le domaine environnemental de fonctionnement, la plage de tension s'étendant entre une tension minimale et une tension maximale, le dispositif comprenant :
- un premier onduleur ayant une tension de fonctionnement égale à une tension basse prédéterminée, la tension basse étant strictement positive et étant inférieure ou égale à la tension minimale, le premier onduleur étant propre à être connecté à la source de tension alternative,
- un second onduleur ayant une tension de fonctionnement égale à une tension haute prédéterminée, la tension haute étant supérieure ou égale à la tension maximale, le second onduleur étant propre à être connecté à la source de tension alternative, et
- un hacheur propre à être connecté à la source de tension continue pour ajuster la tension aux bornes de chaque bloc sur la plage de tension, le hacheur étant connecté au premier onduleur et au second onduleur de sorte que la tension aux bornes du hacheur soit égale à la différence entre la tension haute et la tension basse.

Suivant d'autres aspects avantageux de l'invention, le dispositif comprend une ou plusieurs des caractéristiques suivantes, prises isolément ou suivant toutes les combinaisons techniquement possibles :
- le premier onduleur est connecté entre un point commun et une borne de potentiel égale à la tension basse, dite borne inférieure, le point commun servant de référence de potentiel, le second onduleur étant connecté entre ledit point commun et une borne de potentiel égale à la tension haute, dite borne supérieure, les bornes en tension du hacheur étant connectées à la borne inférieure du premier onduleur et à la borne supérieure du second onduleur ;
- le premier onduleur est connecté entre une borne de potentiel égale en valeur absolue à la tension basse, dite borne supérieure, et un point commun, le point commun servant de référence de potentiel, le second onduleur étant connecté entre ledit point commun et une borne de potentiel égale en valeur absolue à la tension haute, dite borne inférieure, les bornes en tension du hacheur étant connectées à la borne supérieure du premier onduleur et à la borne inférieure du second onduleur ;
- le premier onduleur et le second onduleur sont choisis parmi : un onduleur de courant monophasé, un onduleur de courant triphasé, un onduleur de tension monophasé et un onduleur de tension triphasé ;
- le premier onduleur est un onduleur de courant et le second onduleur est un onduleur de tension ;
- le domaine environnemental de fonctionnement dépend de la température du ou des modules électriques de chaque bloc ;
- le hacheur est propre à rechercher dans le domaine environnemental de fonctionnement le point de fonctionnement de puissance maximale pour chaque bloc ;
- la tension basse est égale à la tension minimale et la tension haute est égale à la tension maximale.

L'invention concerne également un ensemble électrique comprenant :
- une source de tension continue, la source de tension continue comprenant au moins deux blocs comprenant chacun au moins un module électrique, chaque module électrique fonctionnant sur un domaine environnemental de fonctionnement, la tension au bornes de chaque bloc variant sur une plage de tension pour le domaine environnemental de fonctionnement, la plage de tension s'étendant entre une tension minimale et une tension maximale,
- une source de tension alternative, et
- un dispositif de conversion d'énergie entre la source de tension continue et la source de tension alternative, le dispositif étant tel que décrit précédemment.

Suivant d'autres aspects avantageux de l'invention, l'ensemble électrique comprend une ou plusieurs des caractéristiques suivantes, prises isolément ou suivant toutes les combinaisons techniquement possibles :
- la source de tension alternative comprend au moins deux sous-sources séparées électriquement, le premier onduleur étant connecté à l'une des sous-sources et le second onduleur étant connecté à l'autre des sous-sources ;
- le hacheur comprend une branche d'interrupteurs par bloc, chaque bloc ayant l'une de ses bornes connectée à un point commun et l'autre de ses bornes connectée à une branche distincte d'interrupteurs du hacheur, le premier onduleur ayant l'une de ses bornes connectée à l'une des bornes communes de toutes les branches d'interrupteurs du hacheur, le second onduleur ayant l'une de ses bornes connectée à l'autre des bornes communes de toutes les branches d'interrupteurs du hacheur, le premier onduleur et le second onduleur ayant chacun une autre borne connectée au point commun de connexion des blocs ;
- au moins deux blocs sont de nature différente :
- la borne positive ou la borne négative de chaque bloc est connectée au point commun, le point commun servant de référence de potentiel ;
- au moins un bloc comprend plusieurs modules électriques connectés en série ;
- les modules électriques sont choisis parmi : des modules photovoltaïques, des batteries, des électrolyseurs et des piles à combustible.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue schématique d'un exemple d'un ensemble électrique comprenant une source de tension continue, une source de tension alternative et un dispositif de conversion d'énergie entre la source de tension continue et la source de tension alternative,
[Fig. 2] la figure 2 est une vue schématique d'un exemple d'un mode de réalisation d'un ensemble électrique,
[Fig. 3] la figure 3 est une vue schématique d'un exemple d'un autre mode de réalisation d'un ensemble électrique,
[Fig. 4] la figure 4 est une vue schématique d'un exemple d'encore un autre mode de réalisation d'un ensemble électrique,
[Fig. 5] la figure 5 est une vue schématique d'un exemple d'encore un autre mode de réalisation d'un ensemble électrique, et
[Fig. 6] la figure 6 est une vue schématique d'un exemple d'encore un autre mode de réalisation d'un ensemble électrique.

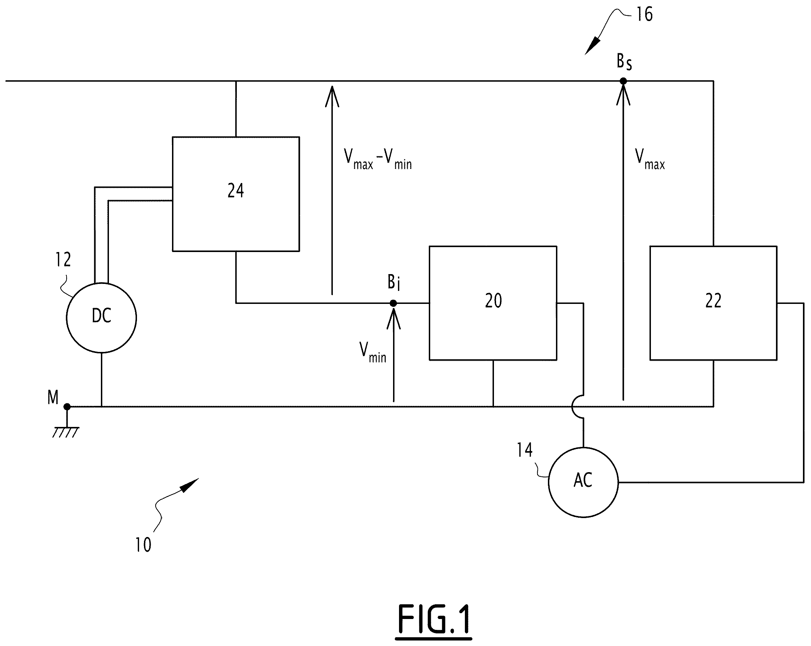

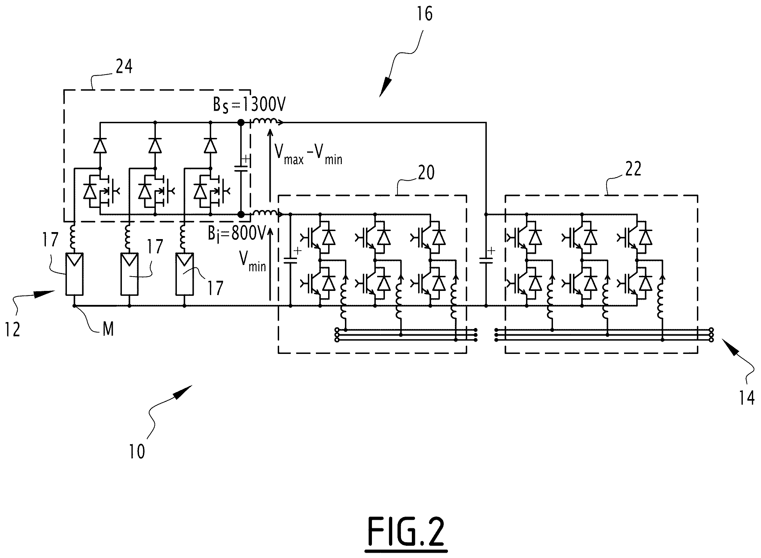

Un ensemble électrique 10 est illustré schématiquement sur la figure 1. Les figures 2 à 6 sont des exemples de réalisation d'un tel ensemble électrique 10.

L'ensemble électrique 10 comprend une source de tension continue 12 (ou source DC), une source de tension alternative 14 (ou source AC) et un dispositif 16 de conversion d'énergie entre la source de tension continue 12 et la source de tension alternative 14.

La source de tension continue 12 comprend au moins deux blocs 17. Chaque bloc 17 forme une source élémentaire.

En particulier, dans les exemples des figures 2 à 6, la source de tension continue 12 comprend trois blocs 17 de modules électriques, les blocs 17 étant connectés à un hacheur 24 qui sera décrit plus en détails dans la suite de la description.

Chaque bloc 17 comprend au moins un module électrique.

Dans un exemple de réalisation, au moins un bloc 17 comprend plusieurs modules électriques connectés en série.

Chaque bloc 17 a une première borne connectée à un point commun M et une seconde borne connectée à un point non commun aux autres blocs 17. Ainsi, la source de tension 12 dispose en sortie de plusieurs sorties en tension différenciées. Comme cela sera décrit dans la suite de la description, la seconde borne de chaque bloc 17 est utilisée pour connecter ledit bloc 17 à différentes branches d'un hacheur 24.

Typiquement, le point commun M sert de référence de potentiel, par exemple de potentiel zéro (relié à la masse). Ce potentiel de référence peut également être laissé flottant (sans raccordement à la masse). Les potentiels indiqués dans la présente demande devront s'entendre comme mesurés par rapport à ce potentiel de référence.

De préférence, les modules électriques sont choisis parmi : des modules photovoltaïques, des batteries, des électrolyseurs et des piles à combustible.

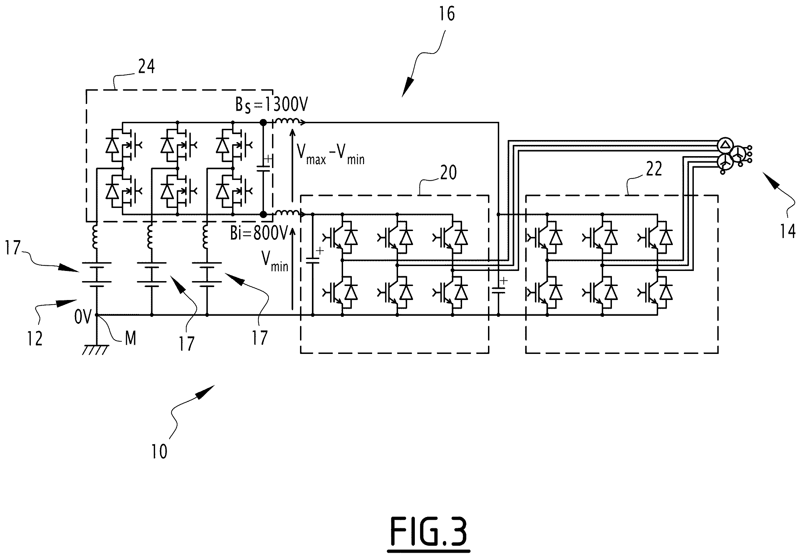

Dans un exemple de réalisation tel qu'illustré par les figures 2 à 5, les différents blocs sont de nature et paramètres semblables. En particulier, sur la figure 2, les blocs 17 sont des blocs de modules photovoltaïques, et sur les figures 3 à 5, les blocs 17 sont des blocs de batteries.

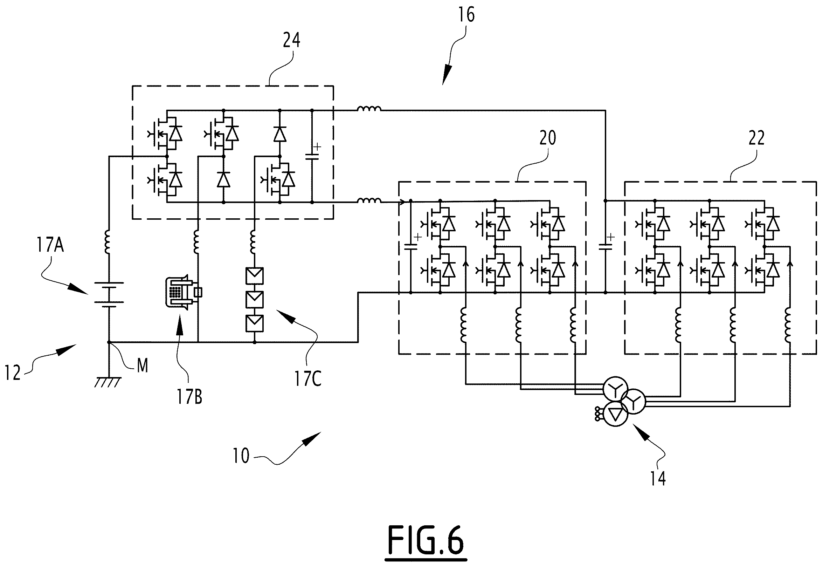

En variante, comme illustré par la figure 6, les blocs 17 sont de nature différentes, formant une configuration hybride. Dans l'exemple spécifique de la figure 6, la source de tension continue 12 est formée des blocs suivants : un bloc de des batteries 17A, un bloc d'électrolyseur 17B et un bloc de modules photovoltaïques 17C.

Chaque module électrique fonctionne sur un domaine environnemental de fonctionnement. Ce domaine correspond aux conditions environnementales ou des conditions systèmes subies par les modules. Un exemple de condition peut par exemple être pour un module photovoltaïque sa température, et pour un module batterie son état de charge. Ces conditions englobent également les conditions système imposées aux modules par le reste du système de l'invention. Le domaine environnemental de fonctionnement possible des modules a pour conséquence que la tension aux bornes de chaque bloc 17 varie au sein d'une plage de tension. La plage de tension s'étend entre une tension minimale V_{inf} et une tension maximale Vₛᵤₚ.

La tension minimale V_{inf} est la tension la plus basse et la tension maximale Vₛᵤₚ est la tension la plus haute. Par exemple, dans le cas des blocs 17 de modules électriques des figures 2 à 6, la tension minimale V_{inf} est égale à 846 V (Volt) et la tension maximale Vₛᵤₚ est égale à 1200 V.

Au titre des conditions système, le point de fonctionnement (courant/tension) de chaque bloc 17 peut par exemple être choisi par l'utilisateur en fonction des besoins et des conditions environnementales du moment, la tension du bloc 17 en résultant faisant par définition partie de la plage de tension entre V_{inf} et Vₛᵤₚ.

Dans un mode de réalisation (valable notamment pour les modules photovoltaïques), le domaine environnemental de fonctionnement comprend par exemple la température des modules comme condition environnementale, ainsi que la fixation du point de puissance maximum de production de chaque bloc 17 comme condition système.

En fonction de la nature des modules électriques, différentes conditions environnementales et différentes conditions systèmes peuvent définir le domaine environnemental de fonctionnement. Par exemple, dans le cas de batteries, la température et/ou l'état de charge et/ou l'état de santé des batteries peuvent par exemple influencer le choix des conditions système, par exemple pour minimiser le vieillissement, et se traduit par un domaine environnemental de fonctionnement et une plage de tension possible des blocs 17. La plage de tension de blocs 17 constitués d'électrolyseurs, ou de piles à combustibles, peut par exemple être influencé par les températures et/ou les débits des fluides réactifs et/ou la recherche d'une condition système comme par exemple une maximisation du rendement.

En fonction des applications, les bornes positives ou les bornes négatives de chaque bloc 17 de modules électriques sont connectés d'une part ensemble en un point commun M et d'autre part respectivement toutes aux bornes positives des onduleurs 20 et 22 ou toutes aux bornes négatives des onduleurs 20 et 22. Le point commun sert de préférence de potentiel de référence, par exemple égal à zéro (connecté à la masse).

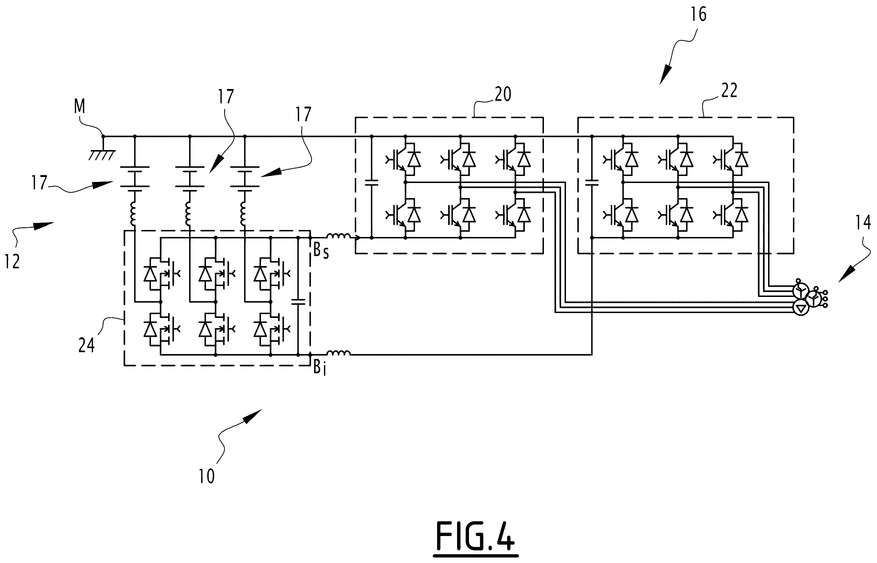

En particulier, dans les exemples des figures 2, 3, 5 et 6, la borne négative de chaque bloc 17 de modules électriques et des onduleurs 20 et 22 est connectée au point commun M qui est au potentiel de référence, par exemple à la masse. Tandis que dans l'exemple de la figure 4, c'est la borne positive de chaque bloc 17 de modules électriques et des onduleurs 20 et 22 qui est connectée au point commun M, le point commun M étant au potentiel de référence, par exemple à la masse.

La source de tension alternative 14 comprend une ou plusieurs sous-sources alternatives.

Dans un exemple de mise en œuvre, illustré sur les figures 3,4 et 6, au moins deux sous-sources sont séparées électriquement l'une de l'autre. Les sous-sources séparées sont, par exemple, un transformateur triphasé à triangle et un transformateur triphasé à étoile. Leur configuration en triangle ou étoile peut par exemple être celle des figures 3 et 4, ou celle de la figure 6.

La ou les sous-sources de tension alternative sont, par exemple, un réseau électrique ou des appareils consommateurs d'énergie, tel qu'un appareil informatique ou un appareil ménager.

Comme illustré par la figure 1, le dispositif 16 de conversion comprend un premier onduleur 20, un second onduleur 22 et un hacheur 24.

Le premier onduleur 20 a une tension de fonctionnement égale à une tension basse Vₘᵢₙ prédéterminée. Le premier onduleur 20 permet de réguler la tension basse Vₘᵢₙ La tension basse Vₘᵢₙ est strictement positive et est inférieure ou égale à la tension minimale Vᵢₙₜ.

De préférence, la tension basse Vₘᵢₙ est égale à la tension minimale Vᵢₙₜ. Le choix de Vₘᵢₙ = V_{inf} permet de minimiser la tension appliquée aux semi-conducteurs. Néanmoins, il peut être utile de choisir Vₘᵢₙ<V_{inf} pour optimiser d'autres caractéristiques, notamment la répartition de courant entre le premier onduleur 20 et le second onduleur 22.

Dans les exemples des figures 2 à 6, la tension minimale V_{inf} est égale à 846 V et la tension basse Vₘᵢₙ est égale à 800 V.

En particulier, dans les exemples des figures 2, 3, 5 et 6, le premier onduleur 20 est connecté entre un point commun M et une borne de potentiel égale à la tension basse Vₘᵢₙ, dite borne inférieure Bi. Le point commun M sert de référence de potentiel, par exemple de potentiel zéro (raccordé à la masse). Alternativement, par exemple dans le cas de l'application photovoltaïque de la Figure 2, le point commun M peut être laissé à un potentiel de référence flottant.

Dans l'exemple de la figure 4, le premier onduleur 20 est connecté entre une borne de potentiel -Vₘᵢₙ égale en valeur absolue à la tension basse, dite borne supérieure Bs, et un point commun M. Le point commun M sert de référence de potentiel, par exemple de potentiel zéro.

Le premier onduleur 20 est propre à être connecté à la source de tension alternative 14.

De préférence, le premier onduleur 20 est choisi parmi : un onduleur de courant monophasé, un onduleur de courant triphasé, un onduleur de tension monophasé et un onduleur de tension triphasé. Dans le cas d'un premier onduleur 20 à source de tension, le premier onduleur 20 est par exemple à deux niveaux de tensions, ou à multi-niveaux de tensions.

Dans les exemples des figures 2 à 4 et 6, le premier onduleur 20 est un onduleur de tension triphasé. Dans ces exemples, le premier onduleur 20 comprend trois branches en parallèle. Chaque branche a deux interrupteurs en série. Chaque interrupteur est formé d'un transistor (par exemple IGBT : transistor bipolaire à grille isolée) et d'une diode connectée en antiparallèle. Le point milieu entre les interrupteurs de chaque branche est connecté à la source de tension alternative 14 par l'intermédiaire d'une inductance (servant à lisser l'onde de courant). Ces inductances peuvent correspondre aux inductances de fuite du transformateur, d'où leur absence de représentation dans les figures 3 et 4. Dans ces exemples, un condensateur est aussi connecté en parallèle du premier onduleur 20 et une inductance est positionnée en série de la borne inférieure Bi ou de la borne supérieure Bs selon les cas. Prise isolément cette partie est tout à fait classique et ne sera pas décrite plus en détail.

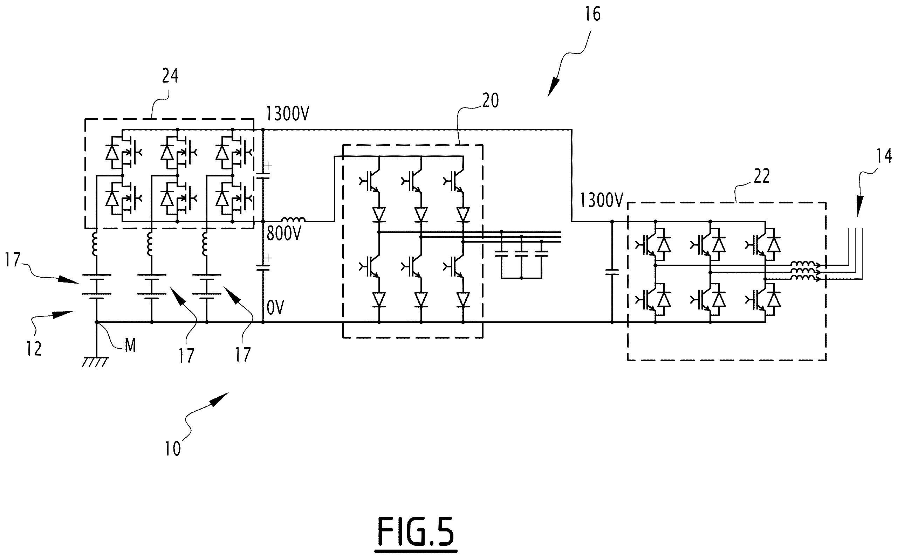

Dans l'exemple de la figure 5, le premier onduleur 20 est un onduleur de courant. Dans cet exemple, le premier onduleur 20 comprend trois branches en parallèle. Chaque branche comporte deux interrupteurs en série. Chaque interrupteur est formé d'un transistor (par exemple IGBT) et d'une diode connectée en série. Le point de sortie des interrupteurs de chaque branche est connecté à la source de tension alternative 14. Dans ce cas l'onduleur 20 est raccordé au hacheur 24 via une inductance. Prise isolément cette partie est tout à fait classique et ne sera pas décrite plus en détail.

Le second onduleur 22 a une tension de fonctionnement égale à une tension haute Vₘₐₓ prédéterminée. La tension haute Vₘₐₓ est supérieure ou égale à la tension maximale Vₛᵤₚ .

De préférence, la tension haute Vₘₐₓ est égale à la tension maximale Vₛᵤₚ. **Il** peut-être intéressant de choisir Vₘₐₓ=Vₛᵤₚ pour minimiser la tension appliquée aux semi-conducteurs du hacheur 24, mais il peut être utile de choisir Vₘₐₓ>Vₛᵤₚ pour optimiser d'autres caractéristiques, notamment la répartition de courant entre l'onduleur 20 et l'onduleur 22.

Dans les exemples des figures 2 à 6, la tension maximale Vₛᵤₚ est égale à 1200 V et la tension haute Vₘₐₓ est réglée à 1300 V.

En particulier, dans les exemples des figures 2, 3, 5 et 6, le second onduleur 22 est connecté entre le point commun M et une borne de potentiel égale à la tension haute Vₘₐₓ, dite borne supérieure Bs.

Dans l'exemple de la figure 4, le second onduleur 22 est connecté entre le point commun M et une borne de potentiel -Vₘₐₓ égale en valeur absolue à la tension haute, dite borne inférieure Bi.

Le second onduleur 22 est propre à être connecté à la source de tension alternative 14.

De préférence, le second onduleur 22 est choisi parmi : un onduleur de courant monophasé, un onduleur de courant triphasé, un onduleur de tension monophasé et un onduleur de tension triphasé. Dans le cas où le second onduleur 22 est un onduleur de tension, le second onduleur 22 est par exemple à deux niveaux de tensions, ou à multi-niveaux de tensions.

Dans les exemples des figures 2 à 6, le second onduleur 22 est un onduleur de tension triphasé. Dans ces exemples, le second onduleur 22 comprend trois branches en parallèle. Chaque branche comporte deux interrupteurs en série. Chaque interrupteur est formé d'un transistor (IGBT) et d'une diode connectée en antiparallèle. Le point de sortie entre les interrupteurs de chaque branche est raccordé à la source de tension alternative 14 par l'intermédiaire d'une inductance (servant à lisser l'onde de courant). Ces inductances peuvent correspondre aux inductances de fuite du transformateur, d'où leur absence de représentation dans les figures 3 et 4..Dans ces exemples, un condensateur est aussi connecté en parallèle du second onduleur 22 et une inductance est positionnée en série de la borne supérieure Bs. Cela permet de lisser le signal arrivant au second onduleur 22.

Dans un exemple préféré de mise en œuvre, tel qu'illustré par la figure 5, le premier onduleur 20 est un onduleur de courant et le second onduleur 22 est un onduleur de tension. Le cas triphasé est illustré par la figure 5, mais cela s'applique aussi à des onduleurs monophasés. Cette configuration est avantageuse car la tension continue contrôlable par un onduleur de courant est plus basse que la tension continue contrôlable par un onduleur de tension, ce qui permet d'optimiser le dimensionnement de ces onduleurs, l'onduleur de courant délivrant Vₘᵢₙ, l'onduleur de tension Vₘₐₓ>Vₘᵢₙ.

Le hacheur 24 est propre à être connecté à la source de tension continue 12 pour ajuster la tension aux bornes de chaque bloc 17 de modules électriques.

Le hacheur 24 est propre à faire fonctionner chaque bloc 17 de modules électriques au point de fonctionnement désiré. Par exemple, le hacheur 24 est propre à rechercher le point de fonctionnement de puissance maximale pour chaque bloc 17. Pour cela, le hacheur 24 comprend une connexion différenciée pour chaque bloc 17 comme cela sera décrit dans la suite de la description.

Par exemple, lorsque les blocs 17 sont des modules photovoltaïques, les bras du hacheur 24 sont par exemple commandés par des algorithmes de type perturbation et observation qui recherchent le point de puissance maximale de chaque bloc 17, ces points pouvant correspondre à des tensions différentes. L'ensemble des tensions possibles des points de puissance maximale en fonction de la température des modules définit par exemple de domaine de tension de fonctionnement entre V_{inf} et Vₛᵤₚ.

Le hacheur 24 est connecté au premier onduleur 20 et au second onduleur 22 de sorte que la tension aux bornes du hacheur 24 soit égale à la différence entre la tension haute Vₘₐₓ et la tension basse Vₘᵢₙ.

En particulier, dans les exemples des figures 2,3, 5 et 6 la borne inférieure Bi est raccordée à la borne positive de l'onduleur 20 et la borne supérieur Bs est raccordée à la borne positive de l'onduleur 22. Ainsi, dans les exemples des figures 2, 3, 5 et 6, la tension aux bornes du hacheur 24 est égale à 500 V (1300 V - 800 V).

Dans la figure 4 la borne inférieure Bi est raccordée à la borne négative de l'onduleur 22 et la borne supérieure Bs est raccordée à la borne négative de l'onduleur 20 ; de sorte que dans tous les cas le potentiel de Bs est supérieur au potentiel de Bi.

De préférence, le hacheur 24 comprend une branche d'interrupteurs pour chaque bloc 17 de modules électriques.

Chaque bloc 17 a, ainsi, l'une de ses bornes connectée à un point commun M et l'autre de ses bornes connectée à une branche distincte d'interrupteurs du hacheur 24. Le premier onduleur 20 a l'une de ses bornes connectée à l'une des bornes communes de toutes les branches d'interrupteurs du hacheur 24. Le second onduleur 22 a l'une de ses bornes connectée à l'autre des bornes communes de toutes les branches d'interrupteurs du hacheur 24. Le premier onduleur 20 et le second onduleur 22 ont chacun une autre borne connectée au point commun M de connexion des blocs 17.

Dans les exemples des figures 2 à 6, la source de tension continue 12 est formée de trois blocs 17 de modules électriques et le hacheur 24 comprend alors trois branches d'interrupteurs. Chaque branche d'interrupteurs comprend deux interrupteurs connectés en série.

Dans l'exemple de la figure 2 (configuration non réversible pour la conversion d'énergie entre la source de tension continue et la source de tension alternative, notamment dans le cas de modules photovoltaïques, de piles à combustible ou d'électrolyseurs), l'un des interrupteurs de chaque branche du hacheur 24 est formé d'un transistor (IGBT), et l'autre interrupteur est formé seulement d'une diode.

Dans les exemples des figures 3 à 5 (configuration réversible, utilisée notamment dans le cas de batteries), chaque interrupteur du hacheur 24 est formé d'un transistor et d'une diode connectée en antiparallèle.

Dans l'exemple de la figure 6, la configuration est hybride avec des batteries 17A, un électrolyseur 17B et des modules photovoltaïques 17C. Les interrupteurs de la branche du hacheur 24 connectée aux batteries 17A, sont chacun formé d'un transistor et d'une diode connectée en antiparallèle. Dans le cas de l'électrolyseur 17B et des modules photovoltaïques 17C, l'un des interrupteurs de chaque branche est formé d'un transistor (IGBT), et l'autre interrupteur est formé seulement d'une diode.

Le point milieu entre les interrupteurs de chaque branche du hacheur 24 est raccordé à un bloc 17 de modules électriques par l'intermédiaire d'une inductance servant à lisser le courant. Dans ces exemples, un condensateur est aussi connecté en parallèle des branches d'interrupteurs pour limiter les surtensions lors des commutations, conformément aux principes classiques de l'état de l'art.

Un exemple de fonctionnement de l'ensemble électrique 10 va maintenant être décrit.

Les onduleurs 20 et 22 sont contrôlés pour délivrer des tensions entre les tensions haute Vₘₐₓ et basse Vₘᵢₙ qui permettent d'encadrer toutes les tensions de consigne des blocs 17. Les bras du hacheur 24 sont contrôlés de sorte à adapter la tension aux bornes de chaque bloc 17 de la source de tension continue 12 à des valeurs de consigne.

La tension des composants du hacheur 24 est ainsi limitée à Vmax-Vmin soit une valeur bien plus faible qu'avec des hacheurs boost classiques qui seraient soumis à Vmax.

Le premier onduleur 20 convertit alors une partie de la puissance en provenance du hacheur 24, et l'autre partie est convertie par le second onduleur 22. En pratique, il est possible de choisir des valeurs Vₘᵢₙ et Vₘₐₓ telles que le premier onduleur 20 et le second onduleur 22 convertisse chacun environ 50 % de la totalité de la puissance transmise.

Ainsi, le dispositif 16 de conversion d'énergie permet, par un abaissement de la tension aux bornes du hacheur 24, de diminuer les contraintes sur le dimensionnement en tension des composants du hacheur 24 et donc aussi le coût, le volume, le poids, et cela sans compromettre l'efficacité de la conversion. Au contraire, la tension étant abaissée, l'efficacité de conversion est améliorée.

Du fait de la présence de deux onduleurs indépendants, le dispositif 16 de conversion est également plus résilient. En effet, en cas de casse de l'un des onduleurs, la possibilité de régler indépendemment et de manière optimale le point de fonctionnement de chacun des blocs 17 est perdue, mais il est toujours possible de continuer de fonctionner à puissance réduite à travers l'autre onduleur en saturant tous les rapports cycliques du hacheur 24.

Un tel dispositif 16 de conversion est particulièrement adapté aux applications, notamment photovoltaïques, de moyenne à forte puissance et basse à moyenne tension. Un tel dispositif 16 de conversion est aussi adapté à d'autres types de modules électriques, tels que des batteries, électrolyseurs ou piles à combustible.

L'homme du métier comprendra que les modes de réalisation et variantes précédemment décrits peuvent être combinés pour former de nouveaux modes de réalisation pourvu qu'ils soient compatibles techniquement.

## Revendications

1. Dispositif (16) de conversion d'énergie entre une source de tension continue (12) et une source de tension alternative (14), la source de tension continue (12) comprenant au moins deux blocs (17) comprenant chacun au moins un module électrique, chaque module électrique fonctionnant sur un domaine environnemental de fonctionnement, la tension aux bornes de chaque bloc (17) variant sur une plage de tension pour le domaine environnemental de fonctionnement, la plage de tension s'étendant entre une tension minimale (V_{inf}) et une tension maximale (Vₛᵤₚ), le dispositif (16) comprenant :
- un premier onduleur (20) ayant une tension de fonctionnement égale à une tension basse (Vₘᵢₙ) prédéterminée, la tension basse (Vₘᵢₙ) étant strictement positive et étant inférieure ou égale à la tension minimale (V_{inf}), le premier onduleur (20) étant propre à être connecté à la source de tension alternative (14),
- un second onduleur (22) ayant une tension de fonctionnement égale à une tension haute (Vₘₐₓ) prédéterminée, la tension haute (Vₘₐₓ) étant supérieure ou égale à la tension maximale (Vₛᵤₚ), le second onduleur (22) étant propre à être connecté à la source de tension alternative (14), et
- un hacheur (24) propre à être connecté à la source de tension continue (12) pour ajuster la tension aux bornes de chaque bloc (17) sur la plage de tension, le hacheur (24) étant connecté au premier onduleur (20) et au second onduleur (22) de sorte que la tension aux bornes du hacheur (24) soit égale à la différence entre la tension haute (Vₘₐₓ) et la tension basse (Vₘᵢₙ).

2. Dispositif (16) selon la revendication 1, dans lequel le premier onduleur (20) est connecté entre un point commun (M) et une borne de potentiel égale à la tension basse (Vₘᵢₙ), dite borne inférieure (Bi), le point commun (M) servant de référence de potentiel, le second onduleur (22) étant connecté entre ledit point commun (M) et une borne de potentiel égale à la tension haute (Vₘₐₓ), dite borne supérieure (Bs), les bornes en tension du hacheur (24) étant connectées à la borne inférieure (Bi) du premier onduleur (20) et à la borne supérieure (Bs) du second onduleur (22).

3. Dispositif (16) selon la revendication 1, dans lequel le premier onduleur (20) est connecté entre une borne de potentiel (-Vₘᵢₙ) égale en valeur absolue à la tension basse, dite borne supérieure (Bs), et un point commun (M), le point commun (M) servant de référence de potentiel, le second onduleur (22) étant connecté entre ledit point commun (M) et une borne de potentiel (-Vₘₐₓ) égale en valeur absolue à la tension haute, dite borne inférieure (Bi), les bornes en tension du hacheur (24) étant connectées à la borne supérieure (Bs) du premier onduleur (20) et à la borne inférieure (Bi) du second onduleur (22).

4. Dispositif (16) selon l'une quelconque des revendications 1 à 3, dans lequel le premier onduleur (20) et le second onduleur (22) sont choisis parmi : un onduleur de courant monophasé, un onduleur de courant triphasé, un onduleur de tension monophasé et un onduleur de tension triphasé.

5. Dispositif (16) selon l'une quelconque des revendications 1 à 4, dans lequel le premier onduleur (20) est un onduleur de courant et le second onduleur (22) est un onduleur de tension.

6. Dispositif (16) selon l'une quelconque des revendications 1 à 5, dans lequel le domaine environnemental de fonctionnement dépend de la température du ou des modules électriques de chaque bloc (17).

7. Dispositif (16) selon l'une quelconque des revendications 1 à 6, dans lequel le hacheur (24) est propre à rechercher dans le domaine environnemental de fonctionnement le point de fonctionnement de puissance maximale pour chaque bloc (17).

8. Dispositif (16) selon l'une quelconque des revendications 1 à 7, dans lequel la tension basse (Vₘᵢₙ) est égale à la tension minimale (V_{inf}) et la tension haute (Vₘₐₓ) est égale à la tension maximale (Vₛᵤₚ).

9. Ensemble électrique (10) comprenant :
- une source de tension continue (12), la source de tension continue (12) comprenant au moins deux blocs (17) comprenant chacun au moins un module électrique, chaque module électrique fonctionnant sur un domaine environnemental de fonctionnement, la tension au bornes de chaque bloc (17) variant sur une plage de tension pour le domaine environnemental de fonctionnement, la plage de tension s'étendant entre une tension minimale (V_{inf}) et une tension maximale (Vₛᵤₚ),
- une source de tension alternative (14), et
- un dispositif (16) de conversion d'énergie entre la source de tension continue (12) et la source de tension alternative (14), le dispositif (16) étant selon l'une quelconque des revendications 1 à 8.

10. Ensemble électrique (10) selon la revendication 9, dans lequel la source de tension alternative (14) comprend au moins deux sous-sources séparées électriquement, le premier onduleur (20) étant connecté à l'une des sous-sources et le second onduleur (22) étant connecté à l'autre des sous-sources.

11. Ensemble électrique (10) selon la revendication 9 ou 10, dans lequel le hacheur (24) comprend une branche d'interrupteurs par bloc (17), chaque bloc (17) ayant l'une de ses bornes connectée à un point commun (M) et l'autre de ses bornes connectée à une branche distincte d'interrupteurs du hacheur (24), le premier onduleur (20) ayant l'une de ses bornes connectée à l'une des bornes communes de toutes les branches d'interrupteurs du hacheur (24), le second onduleur (22) ayant l'une de ses bornes connectée à l'autre des bornes communes de toutes les branches d'interrupteurs du hacheur (24), le premier onduleur (20) et le second onduleur (22) ayant chacun une autre borne connectée au point commun (M) de connexion des blocs (17).

12. Ensemble électrique selon la revendication 11, dans lequel au moins deux blocs (17) sont de nature différente.

13. Ensemble électrique (10) selon la revendication 11 ou 12, dans lequel la borne positive ou la borne négative de chaque bloc (17) est connectée au point commun, le point commun servant de référence de potentiel.

14. Ensemble électrique (10) selon l'une quelconque des revendications 9 à 13, dans lequel au moins un bloc comprend plusieurs modules électriques connectés en série.

15. Ensemble électrique (10) selon l'une quelconque des revendications 9 à 14, dans lequel les modules électriques sont choisis parmi : des modules photovoltaïques, des batteries, des électrolyseurs et des piles à combustible.
